# EUROPEAN PATENT APPLICATION

(11) **EP 4 553 048 A1**
(43) Date of publication of application: **14.05.2025**
(21) Application number: 23208757.7
(22) Date of filing: 09.11.2023
(51) Int. Cl.: C02F 3/20, F04B 27/00, F04B 37/00, F04B 53/08, F04C 29/02, F04C 29/04, F04C 29/06, F04C 29/12, F04C 18/16, F04C 28/08, B01F 23/231

(54) **AERATION ASSEMBLY FOR A LIQUID TREATMENT PLANT**

(71) Applicant: Xylem Europe GmbH, 8200 Schaffhausen (CH)
(72) Inventor: BRATTHÄLL, Johan, 132 37 Saltsjö Boo (SE); STÅHL, Börje, 164 48 Kista (SE)
(74) Representative: Brann AB

(57) **Abstract**

The invention relates to an aeration assembly (3) for a liquid treatment plant (1) having a basin (2) for accommodating liquid to be treated, wherein the aeration assembly (3) is configured to supply a gas flow comprising oxygen to the liquid, the aeration assembly (3) comprising an at least partly submergible compressor unit (4), at least one submergible aerator member (5) configured to be located adjacent a bottom (7) of the basin (2), and an air distribution conduit (6) arranged between the compressor unit (4) and the aerator member (5), the compressor unit (4) comprising a compressor (9) and a drive unit having an electric motor connected to said compressor (9), wherein the drive unit is located below a liquid surface during operation of the aeration assembly (3). The drive unit further comprises a control unit (14) connected to the electric motor and wherein the drive unit is located below the compressor in the vertical direction.

## Description

### Technical field of the Invention

The present invention relates generally to the field of aeration of liquid to be treated in a basin, especially aeration of wastewater/sewage accommodated in a basin of a wastewater treatment plant. Thus, the present invention is suitable for biological treatment of a liquid, such as wastewater/ sewage, but the inventive aeration assembly is also configured to be used for aerating other volumes of liquid/water such as fish farm tanks, ponds, etc.

The present invention relates specifically to the field of aeration assemblies configured to supply a gas flow comprising oxygen to the liquid, the aeration assembly comprising an at least partly submergible compressor unit, at least one submergible aerator member configured to be located adjacent a bottom of the basin, and an air distribution conduit arranged between the compressor unit and the aerator member. The compressor unit comprises a compressor and a drive unit having an electric motor connected to said compressor, wherein the drive unit is located below a liquid surface during operation of the aeration assembly. The present invention also relates to a liquid treatment plant comprising a basin for accommodating liquid to be treated, and comprising such an aeration assembly.

### Background of the Invention

Traditionally wastewater/sewage basins are aerated by means of a compressor unit that is arranged in a shed/house located besides the basin, wherein air distribution conduits extend into the tank to supply the compressed gas/air comprising oxygen to a set of submerged aerator members located at the bottom of the basin.

During such biological treatment/cleaning, the wastewater is usually purified from nitrogen and biological material by having micro-organisms breaking down the biological material into carbon dioxide and water, and by having bacteria transforming the water bound nitrogen into aerial nitrogen. Purified wastewater is released into the nature and in the case the water bound nitrogen is not eliminated there is a risk for eutrophication in the natural watercourses, and due to the fact that the biological material is consuming considerable amounts of oxygen, watercourses lacking in oxygen are generated if insufficiently purified water is released. Thus, the breaking down of the biological material is stimulated by adding large amounts of oxygen to the wastewater by means of one or more aerator members, and the elimination of the water bound nitrogen takes place in the basin during period without added oxygen or in a separate basin without added oxygen.

It is known to provide the gas flow to the liquid as close to the bottom of the basin as possible in order to maximize the dwell time of the gas in the liquid which promotes the transfer of oxygen from the gas to the liquid. The micro-organisms in the so-called activated sludge consume the oxygen in order to break down the biological material present in the wastewater. Thus, for the treatment of liquid a certain amount of oxygen in the liquid to be purified is required and/or a certain oxygen transfer rate to the liquid is required. The oxygen level is chosen in order to provide the best conditions possible for the activated sludge to break down the biological material. When the quantity of biological material is large, a large amount of transferred oxygen is required, and when the quantity of biological material is less, a less amount of transferred oxygen is required, i.e. the oxygen transfer rate to the liquid is preferably varied based on the varying quantities of oxygen consuming biological material in the liquid.

The efficiency of the aeration assembly is determined by the ratio between the quantity of oxygen transferred to the liquid and the required amount of energy/power needed to transfer the required amount of oxygen to the liquid. A disadvantage of having the compressor unit located on the outside of the basin, is the need for long air distribution conduits having many/long branches, valves, etc. leading to pressure drops and lower efficiency. Another disadvantage of having the compressor unit located on the outside of the basin is the compressor generates high noise and thereto the generator generates a lot of heat during air compression, heat that has to be cooled off. Some of the heat is removed by the flow of gas/air. If the compressor is to warm, it may have negative effect on the compressor lubricant, and thereto warm air is less capable of carrying oxygen than cool air.

Many disadvantages are decreased or prevented by having the compressor unit located in the basin under the liquid surface during operation of the aeration assembly, for instance as disclosed in US 9844760 and EP2937317. The normal temperature of wastewater in a basin throughout the year is in the range 5-20 °C, providing an even and satisfactory cooling of the submerged aerator assembly. EP2937317 describes adjustable oxygen transfer in order to match varying demand for oxygen, and this is performed by using a dissolved oxygen sensor located in the liquid and a control device located outside the basin. However, this entails a need for long electrical cables that has to be shielded in order to prevent disturbances.

Thus, there is still a need for a more efficient and less expensive aeration assembly.

### Object of the Invention

The present invention aims at obviating the aforementioned disadvantages and failings of previously known aeration assemblies, and at providing an improved aeration assembly.

A primary object of the present invention is to provide an improved aeration assembly of the initially defined type wherein the compressor unit is cooled off in an efficient way. It is another object of the present invention to provide an improved aeration assembly having reduced noise generation. It is another object of the present invention to provide an aeration assembly with no need for expensive shielded electric cables. It is another object of the present invention to provide an aeration assembly, which entails that the total energy/power consumption is reduced at the same time as the required oxygen transfer rate to the liquid, or the dissolved oxygen level in the liquid, is achieved/maintained, i.e. increased efficiency.

### Summary of the Invention

According to the invention at least the primary object is attained by means of the initially defined aeration assembly having the features defined in the independent claim. Preferred embodiments of the present invention are further defined in the dependent claims.

According to the present invention, there is provided an aeration assembly as initially defined, wherein the drive unit further comprises a control unit connected to the electric motor and wherein the drive unit is located below the compressor in the vertical direction.

Thus, the present invention is based on the understanding that by adjusting the operational speed of the electric motor/compressor, the energy/power demand/consumption is reduced and the efficiency of the aeration assembly is increased, and by having the drive unit submerged in the liquid to be treated, the noise is drastically reduced, the heat generation of the electric motor and control unit is reduced, The location of the control unit and the electric motor, i.e. below the compressor in a submerged condition, decreases the heating of the control unit and the compressor, and thereto there is no need for shielded electrical cables since the control unit and the electrical motor are directly connected to each other.

According to various embodiments of the present invention, the compressor comprises an inlet opening facing vertically upwards, wherein the screw members of the screw compressor are arranged in the vertical direction. Thus, the air supply to the screw compressor is axial/vertical and the driving of the screw members of the screw compressor may be direct from the drive shaft of the adjustable electrical motor, without any need for a gearbox. Thereby, the efficiency of the drive unit is increased.

According to various embodiments of the present invention, the compressor unit comprises a first muffler configured to be at least partly submerged below the liquid surface during operation of the aeration assembly, wherein the first muffler is connected to the compressor. Thereby the noise generated by the compressor and the electrical motor during operation of the aeration assembly is prevented from propagating via air inlet piping to the surroundings.

According to various embodiments of the present invention, the aeration assembly comprises an air inlet conduit connected to the first muffler on the upstream side thereof and configured to extend outside the liquid treatment basin. Thus, the inlet of the air inlet conduit is not located directly above the liquid/wastewater and thereby water vapour from the liquid in the basin is prevented from reaching the compressor and the aerator members.

According to various embodiments of the present invention, the compressor comprises an outlet opening facing in the horizontal direction, wherein the outlet opening of the compressor is connected to a second muffler configured to be at least partly submerged below the liquid surface during operation of the aeration assembly. Thereby the noise generated by the compressor and the electrical motor during operation of the aeration assembly is prevented from propagating via the air distribution conduit to the surroundings.

According to various embodiments of the present invention, the compressor comprises gear wheels and wherein a coupling, arranged between the drive unit and the compressor, comprises a lubricant pump configured to lubricate the gear wheels of the compressor during operation of the aeration assembly. The lubrication of the gear wheels has to be controlled since too little oil will have negative effect on the gear wheels due to increased mechanical friction, and too much oil will also have negative effect on the gear wheels due to increased fluid resistance.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic side view of a basin comprising an inventive aerator assembly,
- Fig. 2: is a schematic perspective view of a compressor unit, and
- Fig. 3: is a schematic cross-sectional side view of a part of a compressor unit.

### Detailed description of preferred embodiments of the invention

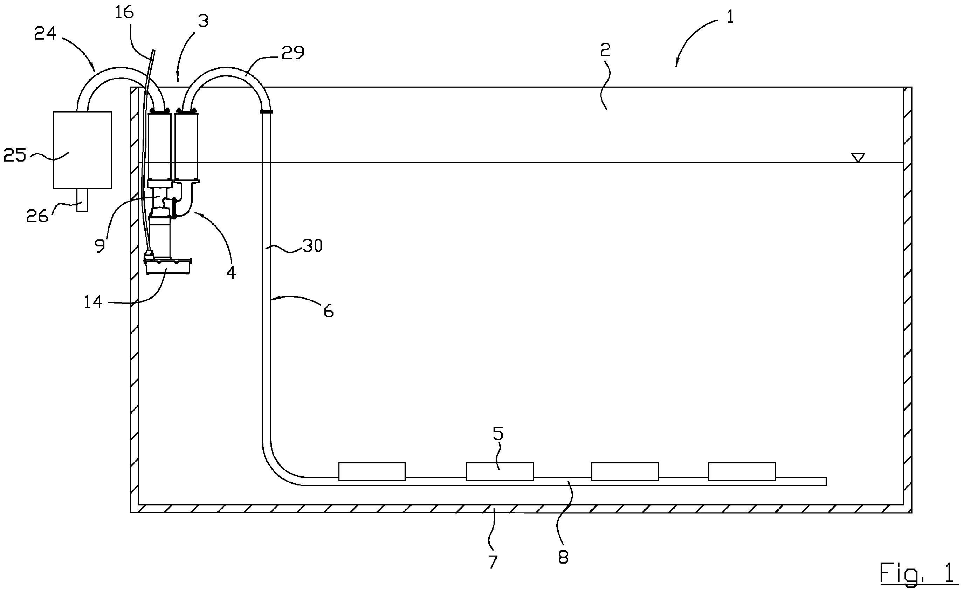

Reference is initially made to figure 1 schematically disclosing a liquid treatment plant, generally designated 1. The liquid treatment plant 1 may for instance be constituted by a wastewater treatment plant for biological treatment of wastewater/sewage. The liquid may comprise solid/biological matter that is visible for the naked eye, and/or that is not visible for the naked eye.

The liquid treatment plant 1 comprises a basin 2 configured for accommodating the liquid to be treated. The basin 2 is also known as tank, lagoon, pond, reservoir, receptacle, etc. The basin 2 is adapted to house liquid/wastewater up to a predetermined filling height/liquid level, even thus the actual liquid level during operation may be below as well as above said filling height without the present invention being affected. The liquid is purified either continuously or batchwise in an inventive liquid treatment plant 1. Thereto, the liquid treatment plant 1 comprises an aeration assembly, generally designated 3, configured to provide a gas flow comprising oxygen to the liquid. Preferably ambient air is used to aerate the liquid, but other oxygen containing gas mixture or pure oxygen may also be used.

The aeration assembly 3 comprises a compressor unit, generally designated 4, at least one aerator member 5 and an air distribution conduit 6.

The aerator members 5 are configured to transfer the oxygen (O₂) from the gas to the liquid/wastewater, and are located adjacent a bottom 7 of the basin 2, i.e. arranged on the bottom 7 or close to the bottom 7. The aerator members 5, also known as diffusors, are submergible aerator members 5 such as fine bubble aerators, e.g. disc aerators, and/or coarse bubble aerators, e.g. tube aerators, that together cover the bottom 7 of the basin. In the disclosed embodiment the aeration assembly 3 comprises four aerator members 5 connected to a single pipe/branch 8 of the air distribution conduit 6. The air distribution conduit 6 may comprise one or a plurality of parallel branches 8 each having one or more aerator members 5. The liquid treatment plant 1 may comprise a plurality of parallel aeration assemblies 3.

According to various embodiments, each aeration assembly 3 may comprise a plurality of compressor units 4, wherein each compressor unit 4 preferably is configured to independently serve one or more aerator members 5. Alternatively, several compressor units 4 are configured to serve the same aerator members 5, either concurrently or alternating or as a back-up, e.g. in order to secure proper operation of the liquid treatment plant 1 during service of one of the compressor units 4.

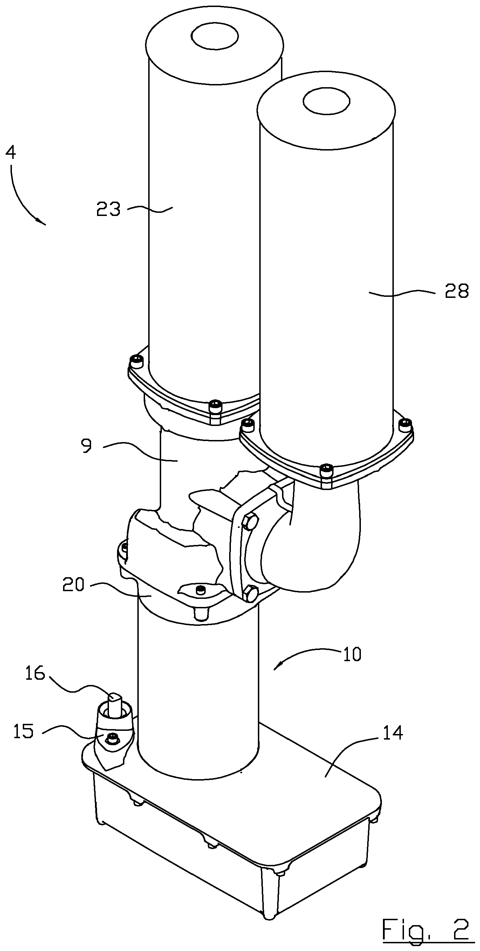

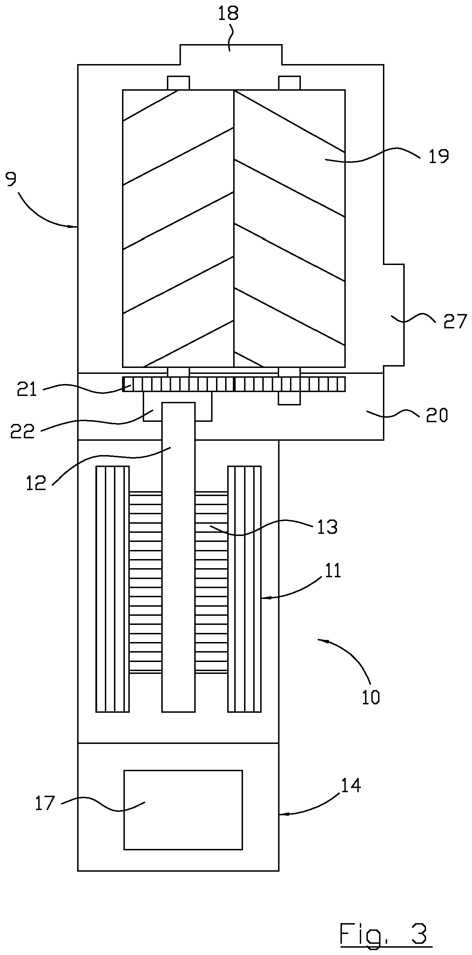

Reference is now also made to figures 2 and 3, wherein figure 2 schematically discloses a compressor unit 4 in a perspective view from above, and wherein figure 3 schematically discloses a part of the compressor unit 4 in a cross-sectional side view. The compressor unit 4 is at least partly submergible. Submergible means that the device in question is designed and configured to be located and operate in a submerged configuration/position, i.e. during operation be entirely located under the liquid surface. However, it shall be realized that the device in question during operation does not have to be entirely located under the liquid surface but may continuously or occasionally be fully or partly located above the liquid surface.

The essential components of the compressor unit 4 are constituted by a compressor 9 and a drive unit, generally designated 10, wherein the drive unit 10 comprises an electric motor 11 connected to the compressor 9. The drive unit 10 comprises a drive shaft 12 connected to a rotor 13 of the electric motor 11, wherein the drive shaft 12 extends in the axial/vertical direction upwards from the electric motor 11. Thus, the drive unit 10 is located below the compressor 9 in the axial/vertical direction. The drive unit 10 is configured to be located below the liquid surface during operation of the aeration assembly 3. Thereby the drive unit 10, especially the electric motor 11, is cooled off by the surrounding liquid/wastewater. According to various embodiments, the compressor 9 is configured to be located below the liquid surface during operation of the aeration assembly 3, in order to remove the heat generated during operation of the compressor 9 and the electric motor 11.

Thereto the drive unit 10 comprises a control unit 14 connected to the electric motor 11. The control unit 14 is preferably located below the electric motor 11 in the axial/vertical direction. Other locations of the control unit 14 are feasible as long as the drive unit 10 is submerged below the liquid surface during operation or the aeration assembly 3, and located below the compressor 9 in the vertical direction. The heat generated by the electric motor 11 and the compressor 9 essentially rise upwards and thereby the location of the control unit 14 below the heat generating elements protects the control unit 14 from additional heating, and the heat generated during operation of the control unit 14 is cooled off by the surrounding liquid/wastewater. The fact that the control unit 14 is adjacent the electric motor, i.e. directly connected to the electric motor 11 entails that no shielded cabling is needed between the control unit 14 and the electric motor 11.

The control unit 14 comprises a liquid tight lead-trough 15 receiving an electric cable 16 that extends from an external power supply, for instance the power mains, and provides power to the compressor unit 4. The electric cable 16 may also comprise signal wires for data communication between the compressor unit 4 and an external control unit (not shown).

According to various embodiments, the control unit 14 comprises a Variable Frequency Drive 17 configured to control the operational speed, rpm, of the electric motor 11, and thereby the operational speed of the compressor 9, for instance by controlling/varying the frequency of the current operating/driving the electrical motor 11. Thus, the compressor 9 is configured to be operated at a variable operational speed. The compressor 9 is operated at elevated/maximum operation speed when there is a high demand for oxygen in the treatment process, and is operated at low/minimum operational speed when there is a low demand for oxygen in the treatment process.

The operational speed of the electric motor 11 may for instance be controlled based on input from a Dissolved Oxygen Sensor (not disclosed) connected to the control unit 14, wherein the operational speed of the electric motor 11 is increased when the monitored/measured level of dissolved oxygen in the liquid is too low, i.e. below a predetermined threshold, and wherein the operational speed of the electric motor 11 is decreased when the monitored/measured level of dissolved oxygen in the liquid is higher than needed, i.e. above a predetermined threshold. Said sensor may be part of the control unit 14, or the compressor unit 4. The operational speed of the electric motor 11 may alternatively be controlled based on input from an external control unit manipulated by an operator.

According to various embodiments, the compressor 9 is constituted by a screw compressor. The compressor 9 comprises an inlet opening 18 facing vertically upwards, and thereto the screw members 19 of the screw compressor 9 are arranged/extending in the axial/vertical direction. Thus, there is no need for a gear box, or the like transmission, between the drive shaft 12 and the screw compressor 9. Thus, there is a direct driving between the electric motor 11 and the screw members 19, i.e. the operational speed is 1:1. The absence of a gear box, or the like transmission, entails less energy loss in the power transmission from the electric motor 11 to the compressor 9, i.e. increased efficiency of the aeration assembly 3.

Thereto the compressor unit 4 comprises a coupling 20 arranged between the drive unit 10 and the compressor 9. The coupling 20 acts as a sealing unit for preventing any moist/liquid in the compressor 9 from entering the drive unit 10. Such moist/liquid originates from the air/gas. Thereto the compressor 9 comprises gear wheels 21, wherein the coupling 20 comprises a lubricant pump 22 configured to lubricate the gear wheels 21 of the compressor 9 during operation of the aeration assembly 3. Too little lubrication of the gear wheels, the mechanical friction will be too high leading to heat and unnecessary power consumption, and too much lubrication of the gear wheels, the fluid friction will be too high leading too unnecessary power consumption. Thus, the gear wheels of the compressor 9 cannot be submerged in lubricant and cannot be dry installed, wherein the lubricant pump 22 is configured to provide adequate amount of lubricant to the gear wheels 21 during operation of the aeration assembly 3.

According to various embodiments, the compressor unit 4 comprises a first muffler 23 connected to the compressor 9, i.e. connected to the inlet opening 18 of the compressor 9. The first muffler 23 is preferably a submergible muffler, wherein the first muffler 23 is configured to be at least partly submerged below the liquid surface during operation of the aeration assembly 3. By being at least partly submerged during operation, the noise muffling function of the first muffler 23 is maximised. It shall be pointed out that the first muffler 23 does not have to be submerged during operation of the compressor unit 4.

Thereto, the aeration assembly 3 comprises an air inlet conduit 24 connected to the first muffler 23 on the upstream side thereof, wherein the air inlet conduit 24 is preferably configured to extend outside the liquid treatment basin 2, i.e. extend over the upper rim of the basin 2, in order to prevent moist arising from the liquid/wastewater in the basin 2 to enter the compressor unit 4. Alternatively, the air inlet conduit 24 is configured to be located directly above the basin 2, i.e. above the liquid surface in the vertical direction, but then at a considerable hight above the liquid surface. According to various embodiments, the said air inlet conduit 24 comprises a filter 25 for preventing solid matter to reach the compressor 9 and the aerator members 5. The filter 25 is preferably also configured to prevent moist/liquid in the air/gas from reaching the compressor 9. An inlet opening 26 of the air inlet conduit 24 is preferably located below the liquid surface in the liquid treatment basin 2 during operation of the aeration assembly 3, in order further prevent moist originating from the liquid/wastewater in the basin 2 to enter the compressor unit 4, in applications when the air inlet conduit 24 extends outside the liquid treatment basin 2.

According to various embodiments, the compressor 9 comprises an outlet opening 27 facing in the horizontal direction, wherein the outlet opening 27 of the compressor 9 is connected to a second muffler 28. The second muffler 28 is preferably a submergible muffler, wherein the second muffler 28 is configured to be at least partly submerged below the liquid surface during operation of the aeration assembly 3. By being at least partly submerged during operation, the noise muffling function of the second muffler 28 is maximised. It shall be pointed out that the second muffler 28 does not have to be submerged during operation of the compressor unit 4.

According to various embodiments, air distribution conduit 6 comprises a first pipe section 29 located adjacent the compressor unit 4 and configured to be located above the liquid surface during operation of the aeration assembly 3, and a second pipe section 30 located downstream said first pipe section 29 and connected to the aerator members 5. Thereby, any liquid/wastewater in the basin 2 entering the air distribution conduit 6 will be prevented from reaching the compressor unit 4.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims.

The present invention is not limited to buffer tanks, but all tanks inside or outside a wastewater treatment plant, tanks for temporary storage of liquid and/or tanks for processing the liquid, are covered by the present application.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments, which relations may be changed if the inventive equipment is provided with another structure/design.

It shall also be pointed out that even thus it is not explicitly stated that features from a specific embodiment may be combined with features from another embodiment, the combination shall be considered obvious, if the combination is possible.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. An aeration assembly (3) for a liquid treatment plant (1) having a basin (2) for accommodating liquid to be treated, wherein the aeration assembly (3) is configured to supply a gas flow comprising oxygen to the liquid, the aeration assembly (3) comprising an at least partly submergible compressor unit (4), at least one submergible aerator member (5) configured to be located adjacent a bottom (7) of the basin (2), and an air distribution conduit (6) arranged between the compressor unit (4) and the aerator member (5), the compressor unit (4) comprising a compressor (9) and a drive unit (10) having an electric motor (11) connected to said compressor (9), wherein the drive unit (10) is located below a liquid surface during operation of the aeration assembly (3), **characterized in that** the drive unit (10) further comprises a control unit (14) connected to the electric motor (11) and wherein the drive unit (10) is located below the compressor (9) in the vertical direction.

2. The aeration assembly (3) according to claim 1, wherein the compressor (9) is constituted by a screw compressor.

3. The aeration assembly (3) according to claim 2, wherein the compressor (9) comprises an inlet opening (18) facing vertically upwards, wherein the screw members (19) of the screw compressor are arranged in the vertical direction.

4. The aeration assembly (3) according to any of claims 1-3, wherein the compressor unit (4) comprises a first muffler (23) configured to be at least partly submerged below the liquid surface during operation of the aeration assembly (3), wherein the first muffler (23) is connected to the compressor (9).

5. The aeration assembly according to claim 4, wherein the aeration assembly (3) comprises an air inlet conduit (24) connected to the first muffler (23) on the upstream side thereof and configured to extend outside the liquid treatment basin (2).

6. The aeration assembly (3) according to claim 5, wherein the air inlet conduit (24) comprises a filter (25) for preventing solid matter to reach the compressor (9) and the aerator member (5).

7. The aeration assembly (3) according to claim 5 or 6, wherein an inlet opening (26) of the air inlet conduit (25) is located below the liquid surface in the liquid treatment basin (2) during operation of the aeration assembly (3).

8. The aeration assembly (3) according to any preceding claim, wherein the compressor (9) comprises an outlet opening (27) facing in the horizontal direction, wherein the outlet opening (27) of the compressor (9) is connected to a second muffler (28) configured to be at least partly submerged below the liquid surface during operation of the aeration assembly (3).

9. The aeration assembly (3) according to any preceding claim, wherein the air distribution conduit (6) comprises a first pipe section (29) located adjacent the compressor unit (4) and configured to be located above the liquid surface during operation of the aeration assembly (3), and a second pipe section (30) located downstream said first pipe section (29) and connected to the aerator member (5).

10. The aeration assembly (3) according to any preceding claim, wherein the control unit (14) comprises a Variable Frequency Drive (17).

11. The aeration assembly (3) according to any preceding claim, wherein the compressor unit (4) comprises a coupling (20) arranged between the drive unit (10) and the compressor (9).

12. The aeration assembly (3) according to claim 11, wherein the compressor (9) comprises gear wheels (21) and wherein the coupling (20) comprises a lubricant pump (22) configured to lubricate the gear wheels (21) of the compressor (9) during operation of the aeration assembly (3).

13. A liquid treatment plant (1) comprising a basin (2) for accommodating the liquid to be treated, and an aeration assembly (3), wherein the aeration assembly (3) comprises an at least partly submergible compressor unit (4), at least one submergible aerator member (5) located adjacent a bottom (7) of the basin (2), and an air distribution conduit (6) arranged between the compressor unit (4) and the aerator member (5), the compressor unit (4) comprising a compressor (9) and a drive unit (10) having an electric motor (11) connected to said compressor (9), wherein the drive unit (10) is located below a liquid surface during operation of the aeration assembly (3), **characterized in that** the drive unit (10) further comprises a control unit (14) connected to the electric motor (11) and wherein the drive unit (10) is located below the compressor (9) in the vertical direction.
